# EUROPEAN PATENT SPECIFICATION

(11) **EP 2 889 480 B1**
(45) Date of publication and mention of the grant of the patent: **05.07.2017**
(21) Application number: 14168555.2
(22) Date of filing: 16.05.2014
(51) Int. Cl.: F04B 17/02, F04B 49/06, F03C 1/40, F03C 1/053, F04B 7/00

(54) **Diagnostic system and diagnostic method for hydraulic machine, and hydraulic transmission and wind turbine generator**
Diagnosesystem und Diagnoseverfahren für eine hydraulische Maschine, und hydraulisches Getriebe und Windturbinengenerator
Système de diagnostic et procédé de diagnostic pour machine hydraulique et transmission hydraulique et générateur de turbine éolienne

(30) Priority: 27.12.2013 JP 2013270844
(43) Date of publication of application: 01.07.2015
(73) Proprietor: MITSUBISHI HEAVY INDUSTRIES, LTD., Tokyo 108-8215 (JP)
(72) Inventor: Mori, Shinichiro, Tokyo, 108-8215 (JP); Hayashi, Toshikazu, Tokyo, 108-8215 (JP); Yuge, Atsushi, Tokyo, 108-8215 (JP); Miki, Takeshi, Tokyo, 108-8215 (JP); Uchida, Michiya, Tokyo, 108-8215 (JP); Uehara, Osamu, Tokyo, 108-8215 (JP); Shimizu, Masayuki, Tokyo, 108-8215 (JP); Ochiai, Hiroyasu, Tokyo, 108-8215 (JP); Caldwell, Niall, Lothian, EH20 9TB (GB)
(74) Representative: Intès, Didier Gérard André

(56) References cited:
- EP-A1- 0 183 295
- WO-A2-2006/124746
- WO-A2-2008/066589
- GB-A- 2 482 879
- US-A- 5 846 056
- US-A1- 2008 190 176
- US-A1- 2009 252 620
- US-A1- 2012 076 670
- US-A1- 2012 156 056

## Description

### [Technical Field]

The present invention relates to a diagnostic system and a diagnostic method for a hydraulic machine, as well as a hydraulic transmission and a wind turbine generator.

### [Background Art]

A hydraulic machine such as a hydraulic pump and a hydraulic motor has been known conventionally. For instance, Patent Reference 1 describes a hydraulic machine for converting energy between fluid energy of operating fluid and rotational energy of a rotation shaft by using cyclical volume change of a working chamber which is formed by a cylinder and a piston.

Patent Reference 2 describes, as a method for suppressing occurrence of opening and closing abnormality of a valve for switching a communication state between a working chamber of a hydraulic machine and outside the working chamber, control of an opening-closing timing of a valve in accordance with a condition of operating fluid (operating oil) and characteristics of components of a fluid operation machine.

### [Citation List]

### [Patent Reference]

[Patent Reference 1]
   US 2010/0040470
[Patent Reference 2]
   WO 2011/104547

US 5846056 and US2012156056 disclose a reciprocating machine comprising a diagnostic system to determine the presence of abnormalities in the machine operation.

### [Summary of Invention]

### [Technical Problem]

In a hydraulic machine such as a hydraulic pump and a hydraulic motor, when the piston behavior becomes abnormal within the cylinder, for instance, due to the change in the opening and closing timing of the valve, it may cause problems such as performance decline of the hydraulic machine, occurrence of damage to the piston or cylinder due to seizing thereof caused by abnormal friction between the piston and the cylinder inner wall.

To prevent these problems in advance, it is important to detect abnormality of the hydraulic machine before performance decline of the hydraulic machine or occurrence of damage to the piston or the like due to seizing.

In this respect, there is almost no description in Patent Reference 1 or 2 as to a details method of accurately diagnosing abnormality of the hydraulic machine (e.g. the above-mentioned abnormality related to the opening and closing timing of the valve).

It is an object of at least one embodiment of the present invention to provide a diagnostic system and a diagnostic method for a hydraulic machine as well as a hydraulic transmission and a wind turbine generator, whereby abnormality of the hydraulic machine can be accurately diagnosed.

### [Solution to Problem]

The present invention is defined in the apparatus claim 1 and in the method claim 9. A diagnostic system according to at least one embodiment of the present invention is for a hydraulic machine which comprises a rotation shaft, a cylinder, a piston forming a working chamber with the cylinder, a high-pressure valve and a low-pressure valve provided for the working chamber, and a converting mechanism for converting between rotational motion of the rotation shaft and reciprocating motion of the piston, and the diagnostic system comprises:
a pressure sensor for detecting a pressure of the working chamber; and
an abnormality determination part for determining abnormality of the hydraulic machine based on a detection result of the pressure sensor.

A pressure inside the working chamber (hereinafter, also referred to as "cylinder pressure") changes in response to opening and closing of the high-pressure valve and the low-pressure valve as well as a reciprocation motion of the piston. During a normal operation of the hydraulic machine, the pressure in the working chamber changes periodically. Further, in the case where the cylinder pressure behaves differently from that of the normal operation of the hydraulic machine, such as the case where the cylinder pressure is high for a period longer or shorter than that of the normal operation, it is considered that abnormality has occurred in the hydraulic machine (e.g. abnormality of the high-pressure valve and the low-pressure valve, etc.).

According to the diagnostic system of the hydraulic machine, the abnormality of the hydraulic machine is determined by the abnormality determination part based on the detection result of the pressure sensor and thus, it is possible to accurately diagnose abnormality of the hydraulic machine.

In some embodiments, the diagnostic system for the hydraulic machine further comprises:
an integration part for integrating measurement values of the pressure of the working chamber detected by the pressure sensor in correspondence to a reciprocating motion cycle of the piston to calculate an integral value; and
a dimensionless integral pressure obtaining part for calculating a dimensionless integral pressure value which indicates a ratio of the integral value calculated by the integration part to a product of a period of the reciprocating motion of the piston and a pressure of a high-pressure line connected to the hydraulic machine for communication with the working chamber via the high-pressure valve, and
the abnormality determination part is configured to determine abnormality of the hydraulic machine by at least considering whether or not the dimensionless integral is within a prescribed range.

With this configuration, the abnormality determination part determines abnormality of the hydraulic machine by at least considering whether or not the dimensionless integral pressure value calculated by the dimensionless integral pressure obtaining part based on the pressure measurement value is within the prescribed range. Thus, it is possible to accurately diagnose abnormality of the hydraulic machine.

As the pressure of the high-pressure oil line itself fluctuates depending on the operation state of the hydraulic machine, the integral value of the pressure (the cylinder pressure) inside the working chamber communication with the high-pressure line via the high-pressure valve is also affected by the operation state of the hydraulic machine. Therefore, by making it dimensionless by the pressure of the high-pressure line as described above, it is possible to determine abnormality eliminating influence of the operation state of the hydraulic machine.

In some embodiments, in the case where a valve opening-closing command is not provided for the high-pressure valve and the low-pressure valve, the abnormality determination part is configured to determine, when the dimensionless integral pressure value exceeds a first threshold, occurrence of abnormality in which the high-pressure valve stays open without being able to be closed in the entire cycle of the reciprocating motion of the piston (hereinafter, referred to as "continuous juddering").

With this configuration, occurrence of the continuous juddering can be detected by the simple technique based on existence of the opening-closing command to the high-pressure valve and the low-pressure valve and a size relation between the dimensionless integral pressure value and the first threshold value. Further, if the continuation juddering occurs, it may cause not only the performance decline of the hydraulic machine but damage to the piston by seizure, etc. Therefore, it is useful in the viewpoint of maintenance of the soundness of the hydraulic machine that occurrence of the continuation juddering is detectable with the above-mentioned configuration.

In some embodiments, in the case where the valve opening-closing command is provided for at least one of the high-pressure valve or the low-pressure valve, the abnormality determination part is configured to:
when the dimensionless integral pressure value is within the prescribed range, determine that the high-pressure valve and the low-pressure valve are normal;
when the dimensionless integral pressure value exceeds an upper limit of the prescribed range, determine that the high-pressure valve is closed later than a prescribed timing (hereinafter referred to as "intermittent juddering"); and
when the dimensionless integral pressure value is below a lower limit of the prescribed range, determine that the high-pressure valve is closed ahead of the prescribed timing (hereinafter referred to as "early closing") or that the low-pressure valve is closed later than a prescribed timing and thus the high-pressure valve is not opened at a prescribed timing (hereinafter referred to as "latch fail".

With this configuration, occurrence of the intermittent juddering, the early closing or the latch fail can be detected by the simple technique based on existence of the opening-closing command to the high-pressure valve and the low-pressure valve and a size relation between the dimensionless integral pressure value and the first threshold value. Further, if the intermittent juddering, the early closing or the latch fail occurs, the performance of the hydraulic machine may decline. Therefore, it is useful in the viewpoint of maintaining the performance of the hydraulic machine that occurrence of these abnormalities is detectable with the above-mentioned configuration.

In some embodiments, the integration part, the dimensionless integral pressure obtaining part and the abnormality determination part are configured by FPGA.

In the hydraulic machine, for instance, in the case where the number of cylinders is large or where the rotation speed of the rotation shaft is high, it is necessary to perform high-speed processing in the operation in the integration part or the dimensionless integral pressure obtaining part, and the abnormality determination in the abnormality determination part, in order to perform the abnormality diagnosis of the hydraulic machine while delay is reduced.

In this point, the FPGA (Field Programmable Gate Array), a high-speed parallel processing is possible. Therefore, with the above-mentioned configuration, since the integration part, the dimensionless integral pressure obtaining part and the abnormality determination part are configured by FPGA, the abnormality determination of the hydraulic machine can be performed at high speed.

In some examples which are not part of the invention, the diagnostic system for the hydraulic machine further comprises:
a duty ratio calculation part configured to calculate a duty ratio which indicates a ratio of a period when the measurement value of the pressure of the working chamber detected by the pressure sensor is not less than a prescribed value to a period of the reciprocating motion of the piston, and
the abnormality determination part is configured to determine abnormality of the hydraulic machine by at least considering whether or not the duty ratio calculated by the duty ratio calculation part is within a prescribed range.

With this configuration, the abnormality determination part determines abnormality of the hydraulic machine based on whether or not the duty ratio calculated from the pressure detected by the pressure sensor is within the prescribed range. Therefore, it is possible to accurately diagnose abnormality of the hydraulic machine.

In some examples which are not part of the invention, the abnormality determination part is configured to compare, regarding at least one cycle of the reciprocating motion of the piston, an actual pressure waveform of the working chamber detected by the pressure sensor with an ideal normal pressure waveform which is predicted from an opening-closing command provided for at least one of the high-pressure valve or the low-pressure valve so as to determine abnormality of the hydraulic machine based on deviation of the actual pressure waveform from the ideal pressure waveform.

With this configuration, the abnormality determination part determines abnormality of the hydraulic machine based on the deviation of the actual waveform detected by the pressure sensor from the ideal pressure waveform predicted from the opening-closing command provided for at least one of the high-pressure valve or the low-pressure valve. Therefore, it is possible to accurately diagnose abnormality of the hydraulic machine.

In some examples which are not part of the invention, the abnormality determination part is configured to compare, with respect to a timing of supplying an opening-closing signal to at least one of the high-pressure valve or the low-pressure valve from a control unit of the hydraulic machine, a delay time of pressure change of the working chamber caused by opening or closing of the at least one of the high-pressure valve or the low-pressure valve with an ideal delay time so as to determine abnormality of the high-pressure valve and the low-pressure valve based on a comparison result of comparing the delay time with the ideal delay time.

The delay time of pressure change of the working chamber can be obtained from the timing of supplying the opening-closing signal to at least one of the high-pressure valve or the low-pressure valve from the control unit of the hydraulic machine and the measurement value of the pressure sensor. With this configuration, the abnormality determination part determines the abnormality of the hydraulic machine based on the comparison result of comparing the delay time based on the measurement value of the pressure sensor to the ideal delay time. Therefore, it is possible to accurately diagnose abnormality of the hydraulic machine.

In some embodiments, the above diagnostic system for the hydraulic machine further comprises:
a variables output part configured to output information relating to the pressure of the working chamber detected by the pressure sensor to a control unit of the hydraulic machine, the information serving as variables for feedback control for at least one of the high-pressure valve or the low-pressure valve.

With this configuration, the information relating to the pressure of the working chamber (e.g. the dimensionless integral pressure value calculated by the dimensionless integral pressure obtaining part) is output to the control unit of the hydraulic machine as the variables for feedback control for at least one of the high-pressure valve or the low-pressure valve. Therefore, it is possible to achieve better operation of the hydraulic machine using this control unit.

A hydraulic transmission according to at least one embodiment of the present invention comprises:
a hydraulic pump configured to generate pressure oil;
a hydraulic motor configured to be driven by the pressure oil from the hydraulic pump;
a high-pressure line connecting a discharge port of the hydraulic pump and an intake port of the hydraulic motor;
a low-pressure line connecting a discharge port of the hydraulic motor and an intake port of the hydraulic pump; and
a hydraulic machine diagnostic part including any one of the diagnostic systems described above and configured to diagnose abnormality of at least one of the hydraulic pump or the hydraulic motor.

The above hydraulic transmission comprises the hydraulic machine diagnostic part which includes the diagnostic system and is configured to diagnose abnormality of at least one of the hydraulic pump or the hydraulic motor. Thus, abnormality of at least one of the hydraulic pump or the hydraulic motor can be determined by the abnormality determination part based on the detection result of the pressure sensor provided in the diagnostic system. Therefore, it is possible to accurately diagnose abnormality of at least one of the hydraulic pump or the hydraulic motor.

In some embodiments, the hydraulic transmission further comprises:
a rotation speed sensor configured to detect a rotation speed of the hydraulic motor;
a first pressure sensor provided at a first position in the low-pressure line on a hydraulic motor side to detect a pressure of the low-pressure line at the first position;
a second pressure sensor provided at a second position in the low-pressure line on a hydraulic pump side to detect a pressure of the low-pressure line at the second position; and
a transmission diagnostic part configured to diagnose abnormality of the hydraulic transmission based on detection results of the rotation speed sensor, the first pressure sensor and the second pressure sensor,
the transmission diagnostic part is configured to:
   obtain a first estimated flow rate in the low-pressure line based on the rotation speed of the hydraulic motor detected by the rotation speed sensor and displacement of the hydraulic motor;
   obtain a second estimated flow rate in the low-pressure line based on a pressure difference between the pressure in the low-pressure line at the first position detected by the first pressure sensor and the pressure in the low-pressure line at the second position detected by the second pressure sensor, and a flow resistance in the low-pressure line between the first position and the second position; and
   determine abnormality of the hydraulic transmission based on a difference between the first estimated flow rate and the second estimated flow rate.

With this configuration, the estimated flow rate in the low-pressure line is obtained in two methods. Specifically, the first estimated flow rate is obtained based on the detection result of the rotation speed sensor, and the second estimated flow rate is obtained based on the detection results of the first pressure sensor and the second pressure sensor. If the whole hydraulic transmission including various sensors (the rotation speed sensor, the first pressure sensor, the second pressure sensor, etc.) is functioning normally, the first estimated flow rate should be equal to the second estimated flow rate. On the other hand, if there is difference between the first estimated flow rate and the second estimated flow rate, it can be estimated that the measurement result of devices (such as the rotation speed sensor and the pressure sensor) used to estimate the flow rate or the parameter required to calculate the estimated flow rate (such as a displacement ratio FD_{M} defining the displacement volume of the hydraulic motor) is different from the actual value. Specifically, failure can be estimated in either one of the measuring devices or the devices that constitute the hydraulic machine. Therefore, it is possible to determine abnormality of the hydraulic transmission based on the difference between the first estimated flow rate and the second estimated flow rate.

A wind turbine generator according to at least one embodiment of the present invention comprises:
any one of the hydraulic transmissions described above;
a wind turbine rotor configured to input mechanical energy to the hydraulic pump of the hydraulic transmission; and
a generator configured to be driven by the hydraulic motor of the hydraulic transmission.

The hydraulic transmission included in the above-mentioned wind turbine generator comprises the hydraulic machine diagnostic part including the diagnostic system and configured to diagnose abnormality of at least one of the hydraulic pump or the hydraulic motor. Thus, abnormality of at least one of the hydraulic pump or the hydraulic motor can be determined by the abnormality determination part based on the detection result of the pressure sensor provided in the diagnostic system. Therefore, it is possible to accurately diagnose abnormality of at least one of the hydraulic pump or the hydraulic motor.

A diagnostic method according to at least one embodiment of the present invention is for a hydraulic machine which comprises a rotation shaft, a cylinder, a piston forming a working chamber with the cylinder, a high-pressure valve and a low-pressure valve provided for the working chamber, and a converting mechanism for converting between rotational motion of the rotation shaft and reciprocating motion of the piston, and this diagnostic method comprises:
a pressure detection step of detecting a pressure of the working chamber; and
an abnormality determination step of determining abnormality of the hydraulic machine based on a detection result of the pressure detection step.
According to the above diagnostic method for the hydraulic machine, abnormality of the hydraulic machine can be determined in the abnormality determination step based on the detection result of the pressure detection step. Therefore, it is possible to accurately diagnose abnormality of the hydraulic machine.

In some embodiments, the diagnostic method for the hydraulic machine further comprises:
an integration step for integrating measurement values of the pressure of the working chamber detected in the pressure detection step in correspondence to a reciprocating motion cycle of the piston so as to calculate an integral value; and
a dimensionless integral pressure obtaining step for calculating a dimensionless integral pressure value which indicates a ratio of the integral value calculated in the integration step to a product of a period of the reciprocating motion of the piston and a pressure of a high-pressure line connected to the hydraulic machine for communication with the working chamber via the high-pressure valve, and
in the abnormality determination step, abnormality of the hydraulic machine is determined by at least considering whether or not the dimensionless integral is within a prescribed range.

According to the above diagnostic method for the hydraulic machine,
whether or not the dimensionless integral pressure value calculated in the dimensionless integral pressure obtaining step based on the pressure measurement value is within the prescribed range is at least considered in the abnormality determination step. Thus, it is possible to accurately diagnose abnormality of the hydraulic machine.

As the pressure of the high-pressure oil line itself fluctuates depending on the operation state of the hydraulic machine, the integral value of the pressure (the cylinder pressure) inside the working chamber communication with the high-pressure line via the high-pressure valve is also affected by the operation state of the hydraulic machine. Therefore, by making it dimensionless by the pressure of the high-pressure line as described above, it is possible to determine abnormality eliminating influence of the operation state of the hydraulic machine.

### [Advantageous Effects of Invention]

According to at least one embodiment of the present invention, abnormality of the hydraulic machine can be diagnosed accurately in the hydraulic machine.

### [Brief Description of Drawings]

[FIG.1] FIG.1 is a schematic illustration of a configuration of a wind turbine generator according to one embodiment.
[FIG.2] FIG.2 is a schematic illustration of a configuration of a diagnostic system for a hydraulic machine (a hydraulic motor) according to one embodiment.
[FIG.3] FIG.3 is a schematic cross-sectional view explaining configurations of a high-pressure and a low-pressure valve.
[FIG.4] FIG.4 is a schematic cross-sectional view explaining configurations of a high-pressure and a low-pressure valve.
[FIG.5] FIG.5 is a block diagram illustrating a configuration of a diagnostic system for a hydraulic machine.
[FIG.6] FIG.6 is a diagram visually showing a dimensionless integral pressure value P'.
[FIG.7] (a) is a graph illustrating change of a cylinder pressure during a normal operation of a hydraulic motor, (b) to (e) are graphs illustrating changes of the cylinder pressure corresponding to respective abnormal modes of the hydraulic motor.
[FIG.8] FIG.8 is a flow chart illustrating one example of an abnormality determination process performed by an abnormality determination part.
[FIG.9] (a) to (e) are graphs each visually illustrating a duty ratio in a pressure waveform detected by a pressure sensor.
[FIG.10] (a) is a graph schematically illustrating a valve opening-closing command, and (b) to (d) show waveforms of a pressure of a working chamber (a cylinder pressure) detected by the pressure sensor.
[FIG.11] FIG.11 is a chart showing a relationship between the cylinder pressure and a HPV control signal to the high-pressure valve during the normal operation of the hydraulic machine.
[FIG.12] FIG.12 is a chart showing a relationship between the cylinder pressure and a HPV control signal to the high-pressure valve during an abnormal operation of the hydraulic machine.
[FIG.13] FIG.13 is an illustration of a configuration of a hydraulic machine according to one embodiment.

### [Description of Embodiments]

Embodiments of the present invention will now be described in detail with reference to the accompanying drawings. It is intended, however, that unless particularly specified, dimensions, materials, shape, its relative positions and the like shall be interpreted as illustrative only and not limitative of the scope of the appended claims.

In the following embodiments, a hydraulic machine according to one embodiment of the present invention is described using a hydraulic motor of a hydraulic transmission which constitutes a drive train of a wind turbine generator as one example. However, the hydraulic machine is not limited to this example and may be a hydraulic pump or a hydraulic motor which is applicable to arbitrary uses.

First, a general structure of a wind turbine generator comprising a hydraulic machine (a hydraulic motor) which is an application target to which the diagnostic system and diagnostic method according to the present embodiment is applied.

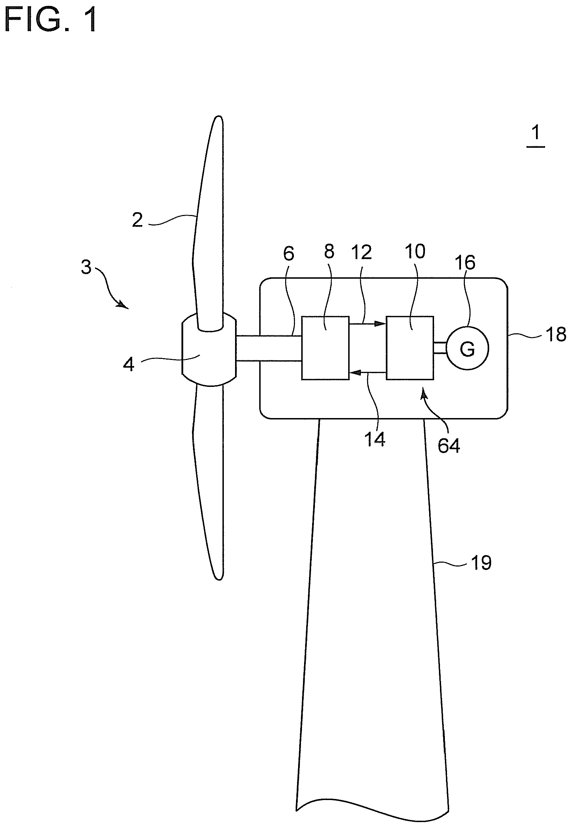

FIG.1 is a schematic illustration of a configuration of a wind turbine generator according to one embodiment. As shown in FIG.1, the wind turbine generator 1 is equipped with a rotor 3 constituted by at least one blade 2 and a hub 4.

In one embodiment, a hydraulic pump 8 is connected to the rotor 3 via a rotation shaft 6. A hydraulic motor 10 is connected to the hydraulic pump 8 through a high-pressure line 12 and a low-pressure line 14. Specifically, an outlet of the hydraulic pump 8 is connected to an inlet of hydraulic motor 10 through the high-pressure line 12, and an inlet of the hydraulic pump 8 is connected to an outlet of the hydraulic motor 10 through the low-pressure line 14. The hydraulic pump 8 is driven by the rotation shaft 6 and boots a pressure of the operating oil to generate high-pressure operating oil (pressure oil). The pressure oil generated by the hydraulic pump 8 is supplied to the hydraulic motor 10 through the high-pressure line 12, and the hydraulic motor 10 is driven by this pressure oil.
The operating oil having performed work in the hydraulic motor 10 is returned to the hydraulic pump 8 through the low-pressure line 14 disposed between the outlet of the hydraulic motor 10 and the inlet of the hydraulic pump 8.

A generator 16 is connected with the hydraulic motor 10. In one embodiment, the generator 16 is a synchronous generator connected to the grid and is configured to be driven by the hydraulic motor 10.

Further, a nacelle 18 installed on the tower 19 covers at least a part of the rotation shaft 6. In one embodiment, the hydraulic pump 8, the hydraulic motor 10 and the generator 16 are installed inside the nacelle18.

In the wind turbine generator 1 shown in FIG.1, rotation energy of the rotor 3 is inputted into the generator 16 via a hydraulic transmission 64 including the hydraulic pump 8 and the hydraulic motor 10 to generate electric power in the generator 16.

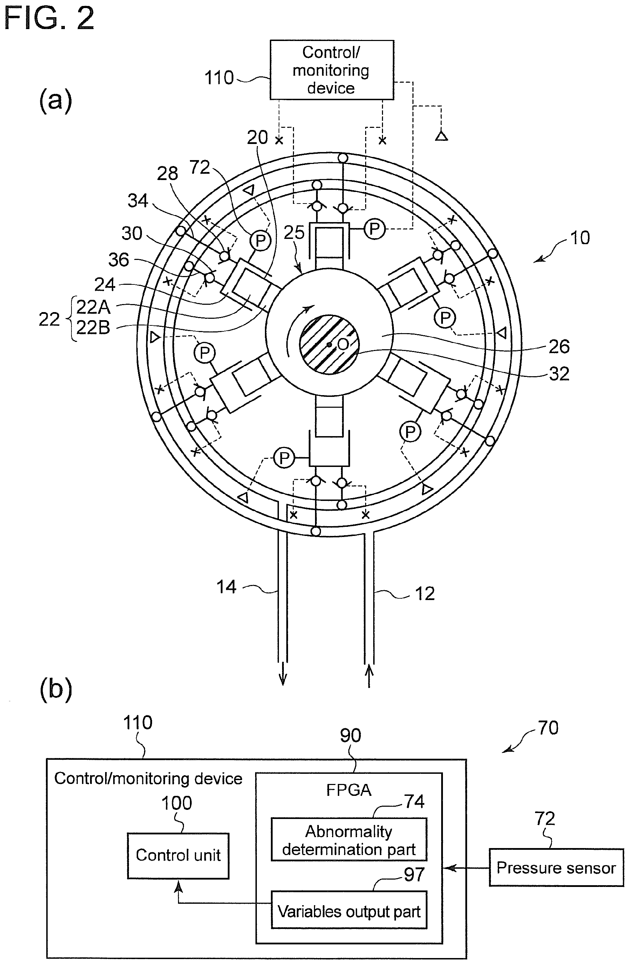

Next, the diagnostic system and diagnostic method for the hydraulic machine according to the embodiment are explained. FIG.2 is a schematic illustration of a configuration of a diagnostic system for a hydraulic machine (a hydraulic motor) according to one embodiment. FIG.2 (a) is a general illustration of the diagnostic system for the hydraulic machine, and FIG.2 (b) is an illustration of a configuration of a control/monitoring device.

A diagnostic system 70 for the hydraulic machine illustrated in FIG.2 (a) is a diagnostic system for the hydraulic motor 10. The hydraulic motor 10 comprises a rotation shaft 32, cylinders 20, pistons 22 which form working chambers 24 with the cylinders 20, a high-pressure valve 28 and a low-pressure valve 30 provided for the working chamber, and a converting mechanism 25.

The converting mechanism 25 is for converting between rotational motion of the rotation shaft 32 and reciprocating motion of the piston 22 and may include a cam 26 having a cam profile engageable with the piston 22.

From the perspective of smoothly convert reciprocating motion of the piston 22 into rotational motion of the rotation shaft 32, the piston 22 is preferably constituted by a piston body 22A slidably moving in the cylinder 20, and a piston roller or a piston shoe which is attached to the piston body 22A and contacts the cam profile of the cam 26. In FIG.2, the example in which the piston 22 is constituted by the piston body 22A and a piston shoe 22B is illustrated.

The cam 26 is an eccentric cam disposed eccentrically with respect to the axial center O of the rotation shaft (crankshaft) 32 of the hydraulic motor 10. While the piston 22 moves up and down once, the cam 26 and the rotation shaft 32 with the cam 26 attached thereto make one rotation.

In another embodiment, the cam 26 is an annular multi-lobe cam (a ring cam) having two or more lobes (convex parts). In this case, while the cam 26 and the rotation shaft 32 with the cam 26 attached thereto make one rotation, the pistons 22 reciprocate as many times as the number of lobes.

The high-pressure valve 28 is provided in a high-pressure communication line 34 between the working chamber 24 and the high-pressure lines 12 disposed outside the working chamber 24, and is configured to switch a communication state between the working chamber 24 and the high-pressure line 12. The low-pressure valve 30 is provided in a low-pressure communication line 36 between the working chamber 24 and the low-pressure line14 disposed outside the working chamber 24, and is configured to switch a communication state between the working chamber 24 and the low-pressure line 14.

A control unit 100 (see FIG.2 (b)) contained in a control/monitoring device 110 is configured to control opening and closing operation of the high pressure valve 28 by supplying a HPV control signal to the high pressure valve 28 (an opening-closing command to the high pressure valve 28), and control opening and closing operation of the low-pressure valve 30 by supplying a LPV control signal to the low-pressure valve 30 (an opening-closing command to the low-pressure valve 30).

Moreover, the pressure of the working chamber 24 detected by a pressure sensor 72 is inputted to the control/monitoring device 110. The detection result of this pressure sensor 72 is used to determine abnormality of the hydraulic machine in a FPGA 90 which is described later.

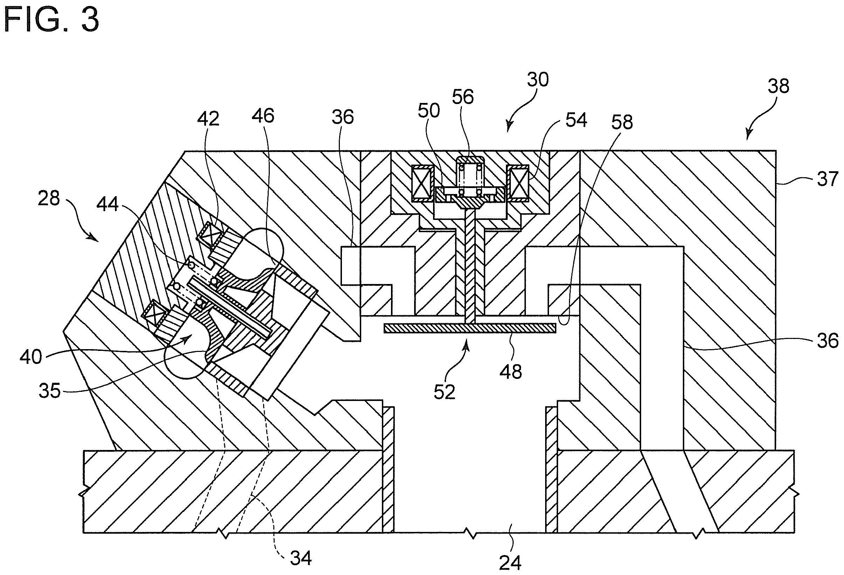

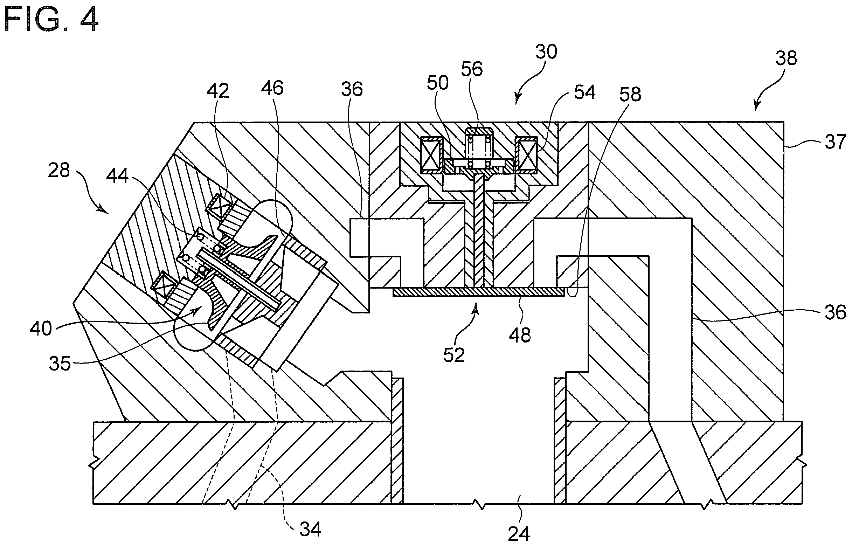

FIG.3 and FIG.4 are schematic sectional views for explaining the configurations of the high-pressure valve 28 and the low-pressure valve 30. FIG.3 is a view showing a state when the high-pressure valve 28 is closed and the low-pressure valve 30 is open, and FIG.4 is a view showing a state when the high-pressure valve 28 is open and the low-pressure valve 30 is closed. In some embodiments, the high-pressure valve 28, the low-pressure valves 30, and a casing 37 for the valves may be unitized into a valve unit 38 as illustrated in FIG.3 and FIG.4.

The high-pressure valve 28 illustrated in FIG.3 and FIG.4 is provided with a movable unit 40 including a valve element 35, a solenoid coil 42 which functions as an actuator for moving the movable unit 40 to a valve-opening position and a valve-closing position, a spring 44, and a valve seat 46. The high-pressure valve 28 is an electromagnetic poppet valve of normally closed type, and the valve seat 46 is provided on the working chamber 24 side with respect to the valve element 35. The high-pressure valve 28 is configured to switch the communication state between the working chamber 24 and the high-pressure line 12 (see FIG.2) by movement of the movable unit 40 resulting from electromagnetic force of the solenoid 42 or the energizing force of the spring 44.

When the high-pressure valve 28 is not excited by the HPV control signal from the control unit 100, the movable unit 40 is energized by the spring 44 toward the valve seat 46, to be held in the position (the position of the movable unit 40 shown in FIG.3) where the working chamber 24 does not communicate with the high-pressure line 12. When the high-pressure valve 28 is excited by the HPV control signal from the control unit 100, the movable unit 40 is moved by the electromagnetic force against the energizing force of the spring 44 to the position (the position of the movable unit 40 shown in FIG.4) where the working chamber 24 communicates with the high-pressure line 12.

The low-pressure valve 30 illustrated in FIG.3 and FIG.4 is provided with a movable unit 52 having a valve element 48 and an armature 50, a solenoid 54, a spring 56, and a valve seat 58. The low-pressure valve 30 is an electromagnetic poppet valve of normally open type, and the valve element 48 is provided on the working chamber 24 side with respect to the valve seat 58. The low-pressure valve 30 is configured to switch the communication state between the working chamber 24 and the low-pressure line 14 (see FIG.2) by movement of the movable unit 52 resulting from electromagnetic force of the solenoid 54 or the energizing force of the spring 56.

When the low-pressure valve 30 is not excited by the LPV control signal from the control unit 100, the movable unit 52 is energized by the spring 56 in the direction of moving away from the valve seat 58 so as to be held in the valve-opening position (the position of the movable unit 52 in FIG.3) where the working chamber 24 communicates with the low-pressure line 14. When the low-pressure valve 30 is excited by the LPV control signal from the control unit 100, the armature 50 is attracted by the electromagnetic force of the solenoid 54, and the movable unit 52 is moved by the electromagnetic force toward the valve seat 56 against the energizing force of the spring 56 to move to the valve-closing position (the position of the movable unit 52 in FIG.4) where the working chamber 24 does not communicate with the high-pressure line 12.

The diagnostic system 70 for the hydraulic machine is, as illustrated in FIG.2(a) and (b), provided with a pressure sensor 72 for detecting a pressure of the working chamber 24, and the an abnormality determination part 74 for determining abnormality of the hydraulic motor 10 based on the detection result of the pressure sensor 72. The abnormality determination part 74 may be included in the control/monitoring device 100 for controlling and monitoring the operation state of equipments constituting the hydraulic motor 10 (for example, the high-pressure valve 28 and the low-pressure valve 30) or measuring devices (for example, the pressure sensor 72).

In the case where the hydraulic motor 10 has a plurality of working chambers 20 formed by a plurality of cylinders 20 and a plurality of pistons 22, respectively, as shown in FIG.2 (a), the pressure sensor 72 may be provided for each of the working chambers 24. In this case, it is possible to perform the abnormality determination for each of the cylinders 20 based on the pressure measured by the pressure sensor 72 and thus, it is possible to identify the cylinder 20 with abnormality.

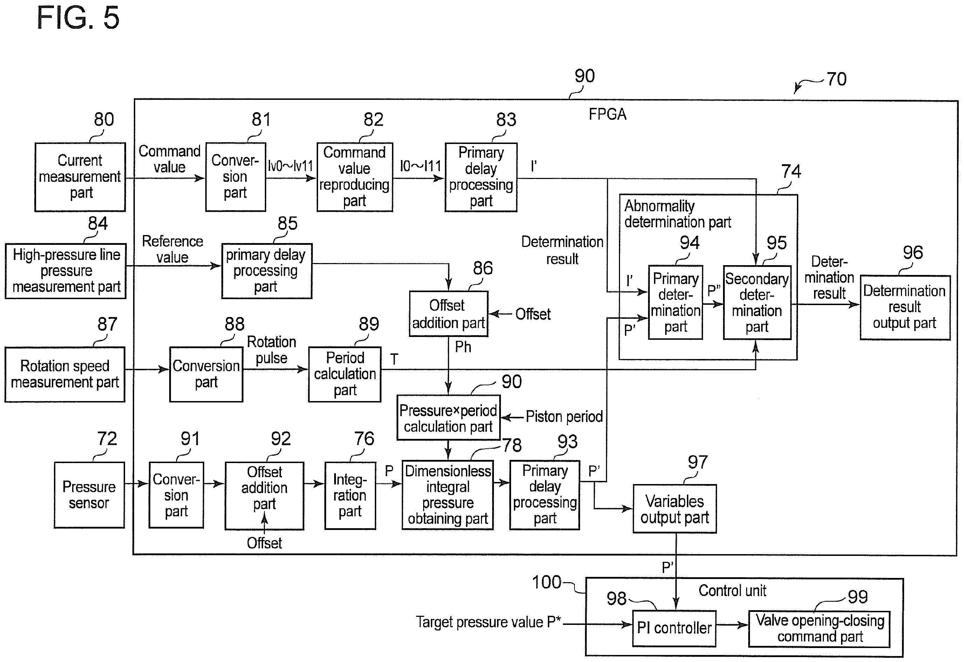

FIG.5 is a block diagram illustrating the configuration of the diagnostic system for the hydraulic machine.

As shown in FIG.5, the diagnostic system 70 for the hydraulic machine is further provided with an integration part 76 and a dimensionless integral pressure obtaining part 78.

The pressure measurement value of the working chamber 24 detected by the pressure sensor 72 is sent to the integration part 76. In this process, the pressure measurement value sent to the integration part 76 may not be the detection result directly obtained from the pressure sensor 72 and may be the value converted from the detection result of the pressure sensor into an appropriate pressure value by passing through a conversion part 91 and an offset addition part 92. For example, a distortion value detected by the pressure sensor 72 may be converted into a suitable pressure value in the conversion part 91, and when offset calculation is required, an offset value may be added in the offset addition part 92.

In the integration part 76, an integral value P is computed by integrating the pressure measurement value sent from the pressure sensor 72 in correspondence to a reciprocating motion cycle of the piston to calculate an integral value P. The integration corresponding to the reciprocating motion cycle of the piston 22 means finding the integral about time covering the period T of the reciprocating motion of the piston 22 (for example, from the time when the piston 22 reaches the bottom dead center to the time when the piston 22 reaches the bottom dead center after reaching the top dead center).

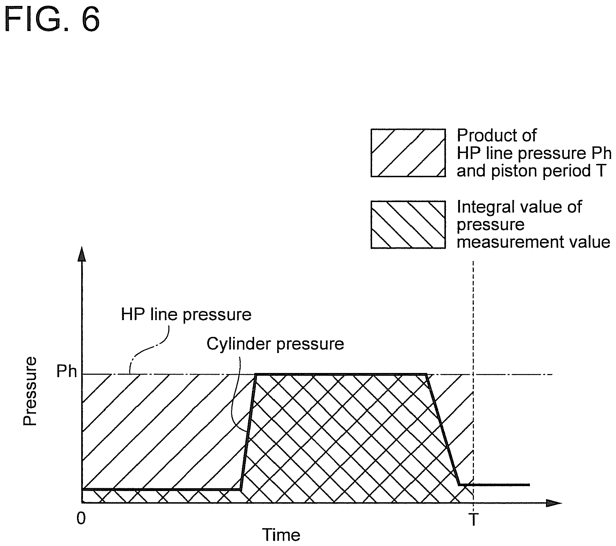

In the dimensionless integral pressure obtaining part 78, a dimensionless integral pressure value P' (= P/ (Pₕ×T) is calculated. The dimensionless integral pressure value P' indicates a ratio of the integral value P calculated in the integration part 76 to the product of the pressure Pₕ of the high-pressure line 12 and the reciprocating motion period (piston period) T of the piston 22. Further, FIG.6 is a diagram visually showing "a ratio of the integral value P calculated in the integration part 76 to the product of the pressure Pₕ of the high-pressure line 12 and the reciprocating motion period T of the piston 22" which is the dimensionless integral pressure value P'.

Based on the dimensionless integral pressure value P' obtained in the above manner, abnormality determination can be performed in the abnormality determination part 74. Since the pressure of the high-pressure line 12 itself changes according to the operation state of the hydraulic machine, the integral value of the pressure (the cylinder pressure) inside the working chamber 24 communicating with the high-pressure line 12 via the high-pressure valve 28 is also affected by the operation state of the hydraulic machine. Therefore, by making it dimensionless by the pressure of the high-pressure line 12 as described above, it is possible to determine abnormality eliminating the influence of the operation state of the hydraulic machine (the hydraulic motor 10).

Further, the pressure Pₕ of the high-pressure line 12 is obtained by processing the measurement value measured by a high-pressure line pressure measurement part 84 in a primary delay processing part 85 and an offset addition part 86 if needed. Moreover, the piston period T is computed in a period calculation part 89 based on a value obtained by performing conversion processing of the measurement value measured by the rotation speed measurement part 87 of the hydraulic motor in a conversion part 88 if needed.

The abnormality determination part 74 is configured to determine abnormality of the hydraulic motor 10 by at least considering whether or not the dimensionless integral pressure value P' is within a prescribed range. In the abnormality determination part 74, abnormality of the hydraulic motor 10 is determined, in addition to the dimensionless integral pressure value P', based on existence of the opening-closing command (the HPV control signal or LPV control signal) to the high-pressure valve 28 or the low-pressure valve 30 from the control unit 100.

As shown in FIG.5, the determination result of the abnormality determination part 74 may be outputted to a determination result output part 96 (for example, a monitor).

In some embodiments, as illustrated in FIG.5, a valve opening-closing command value I' explained below is used as information from the control unit 100, which indicates existence of the opening-closing command to the high-pressure valve 28 or the low-pressure valve 30.

The valve opening-closing command value I' is obtained by processing suitable conversion etc. of a measurement value of the current passing through the solenoid (42, 54) of at least one of the high-pressure valve 28 or the low-pressure valve 30. The measurement value of the current is measured by a current measurement part 80. Since the current passing through the solenoid (42, 54) is generated due to the HPV control signal or the LPV control signal from the control unit 100, it shows whether or not there is the opening-closing command from the control unit 100. The measurement value (raw value) of the current flowing to the solenoid (42 54) acquired by the current measurement part 80 may be converted into a current value Iv by a conversion part 81, and may be a current value I by reproducing a pulse-like command value waveform about this current value I. Furthermore, the current value I may be processed in a primary delay processing part 83 by primary delay processing to obtain a valve opening-closing command value I' as an index which shows whether there is the opening-closing command from the control unit 100.

In another embodiment, whether the opening-closing command is provided for the high pressure valve 28 or the low-pressure valve 30 from the control unit may be determined from the HPV control signal or the LPV control signal outputted from the control unit.

In FIG.5, Iv0 ∼ Iv11 and I0 ∼ I11 indicate the current values in the solenoid (42, 54) of the high-pressure valve 28 or the low-pressure valve 30 corresponding to respective cylinders 20 or the low-pressure valve 30 in case where the hydraulic motor 10 has 12 cylinders 20.

The abnormality determination part 74 includes a primary determination part 94 and a secondary determination part 95. The primary determination part 94 determines based on the above-mentioned dimensionless integral pressure value P' and the valve opening-closing command value I'. The secondary determination part 95 determines abnormality of the hydraulic machine based on the output P" from the primary determination part 94.

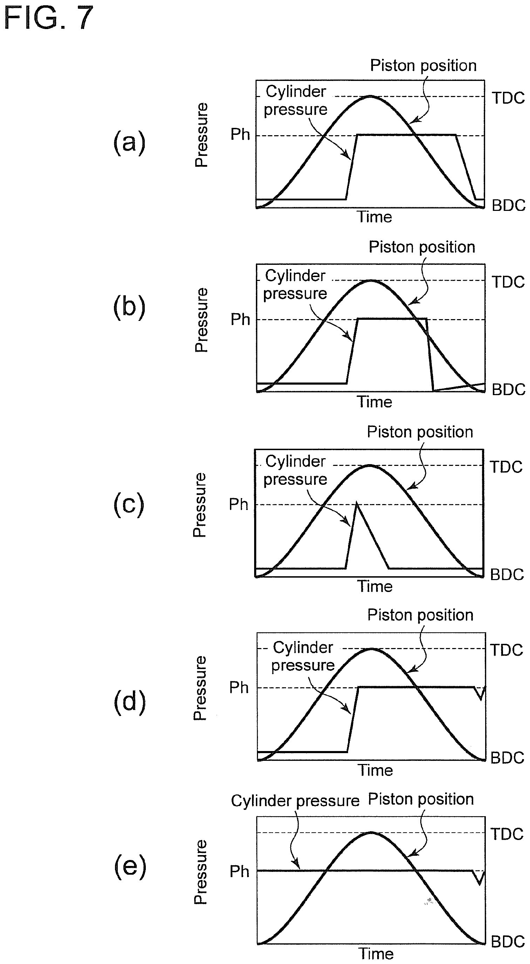

In FIG.7, (a) is a graph illustrating change of the cylinder pressure during a normal operation of the hydraulic motor, (b) to (e) are graphs illustrating changes of the cylinder pressure corresponding to respective abnormal modes of the hydraulic motor.

As illustrated in FIG.7A, the cylinder pressure of the hydraulic motor 10 is substantially equal to the pressure of the low-pressure line 14 in a most part of the period (a compression stroke) while the piston 22 moves from the bottom dead center toward the top dead center. In the hydraulic motor 10, when the piston 22 reaches just before the top dead center, the solenoid 54 of the low-pressure valve 30 is excited to close the low-pressure valve 30, and immediately after that, the solenoid 42 of the high-pressure valve 28 is excited to open the high-pressure valve 28. Therefore, the cylinder pressure starts increasing rapidly from just before the top dead center and increases up to the pressure Ph of the high-pressure line 12. Then, the piston 22 is moved downward from the top dead center to the bottom dead center by the pressure oil introduced to the working chamber 24 via the high pressure valve 28 (an intake stroke). When the piston 22 is located just before the bottom dead center, the high-pressure valve 28 is changed into non-exciting state and closed. Immediately after this, the low-pressure valve 30 is changed into non-exciting state and opened. As a result, the cylinder pressure drastically declines just before the bottom dead center and declines to the pressure of the low-pressure line 14. Thus, the period when the cylinder pressure is substantially equal to the pressure Ph of the high-pressure line 12 is approximately half of the reciprocating motion period T of the piston.

On the other hand, if the opening-closing timing of the high-pressure valve 28 and the low-pressure valve 30 shifts from the normal timing, abnormal cylinder pressure change appears as shown in FIG.7 (b) - (e).

The abnormality shown in FIG.7 (b) is the abnormality (early closing) which appears when the high-pressure valve 28 is closed ahead of the prescribed timing. Compared to the normal cylinder pressure change shown in FIG.7 (a), the period when the cylinder pressure is substantially equal to the pressure Ph of the high pressure line 12 is slightly short.

The abnormality shown in FIG.7(c) is the abnormality (latch fail) which appears when the low-pressure valve 30 is closed later than a prescribed timing and thus the high-pressure valve 28 is not opened at a prescribed timing. Compared to the normal cylinder pressure change shown in FIG.7 (a), the period when the cylinder pressure is substantially equal to the pressure Ph of the high pressure line 12 is significantly short.

The abnormality shown in FIG.7 (d) is the abnormality (intermittent juddering) which appears when, as a result of closing the high-pressure valve 28 later than a prescribed timing, the low-pressure valve 30 cannot open due to a fluid differential pressure acting on both sides of the valve element 48 of the low-pressure valve 30, although the low-pressure valve 30 is in the non-excited state and the piston 22 reaches the bottom dead center. In this case, when the piston 22 starts moving up toward the top dead center from the bottom dead center after that, the operating fluid in the working chamber 24 is compressed in the state that the high-pressure valve 28 is opened and the low-pressure valve 30 stays closed. This makes it even harder to open the low-pressure valve 30. Compared to the normal cylinder pressure change shown in FIG.7 (a), the period when the cylinder pressure is substantially equal to the pressure Ph of the high pressure line 12 is long in the case where the intermittent juddering occurs.

Further, the abnormality shown in FIG.7 (e) is the abnormality (continuous juddering) which appears when the high-pressure valve 28 stays open without being able to be closed for the entire cycle of the reciprocating motion of the piston 22 because the valve element 35 becomes immovable due to foreign matters being mixed in or fixation of the movable unit 40 of the high pressure valve 28. Compared to the normal cylinder pressure change shown in FIG.7 (a), the period when the cylinder pressure is substantially equal to the pressure Ph of the high pressure line 12 is significantly long in the case where the continuous juddering occurs.

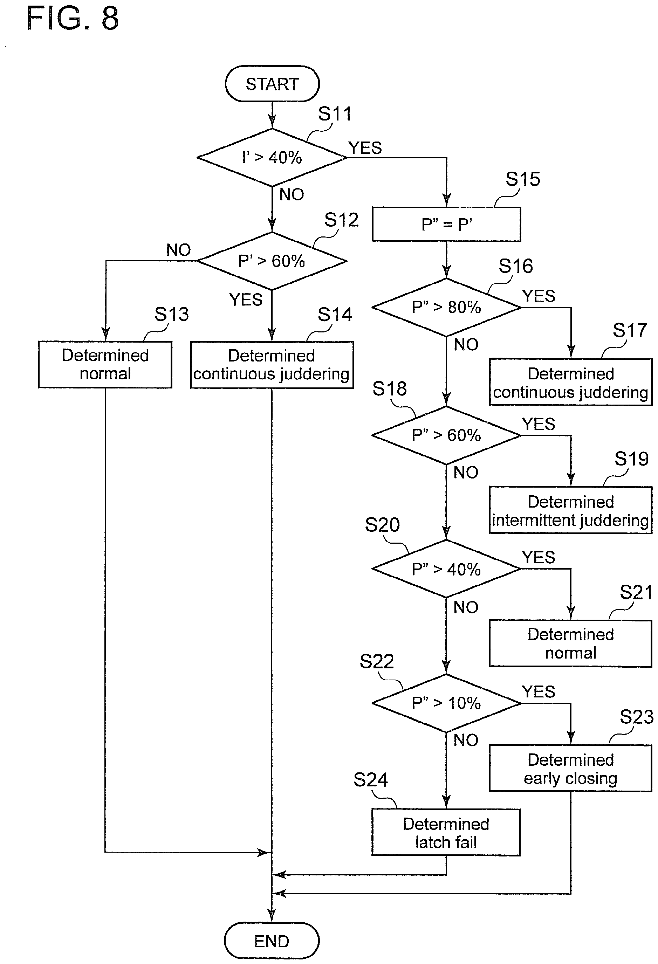

FIG.8 is a flow chart illustrating one example of the abnormality determination process performed by the abnormality determination part 74. The abnormality determination process performed by the abnormality determination part 74 is explained in detail in reference to FIG.5 and FIG.8.

The primary determination part 94 determines whether or not the opening-closing command (motoring command) is provided for the high-pressure valve 28 and the low-pressure valve 30 based on the relation between the valve opening-closing command value I' and the threshold (see step S11 of FIG.8). If the valve opening-closing command value I' is greater than the threshold (40% in the example shown in FIG.8), the primary determination part 94 determines that the opening-closing command is provided for the high-pressure valve 28 and the low-pressure valve 30 (determined as YES in step S11 of FIG.8). On the other hand, if the valve opening-closing command value I' is not greater than the threshold (40% in the example shown in FIG.8), the primary determination part 94 determines that the opening-closing command is not provided for the high-pressure valve 28 and the low-pressure valve 30 (determined as NO in step S11 of FIG.8).

First, in the case where the valve opening-closing command value I' is not greater than the threshold (40% in the example shown in FIG.8) and it is determined that the opening-closing command is not provided for the high-pressure valve 28 and the low-pressure valve 30 (determined as NO in step S11 of FIG.8), the determination process performed by the abnormality determination part 74 is as follows.

When the valve opening-closing command value I' is not greater than the threshold (40% in the example shown in FIG.8) and the dimensionless integral pressure value P' is not greater than the first threshold (60% in the example shown in FIG.8) (when determined as NO in step S12 of FIG.8), the primary determination part 94 inputs a constant (for example, 50%) into the secondary determination part 95 as the output P", and the secondary determination part 95 determines that the hydraulic motor 10 is normal (see step S13 of FIG.8).

On the other hand, when the valve opening-closing command value I' is not greater than the threshold (40% in the example shown in FIG.8) and the dimensionless integral pressure value P' is greater than the first threshold (60% in the example shown in FIG.8) (when determined as YES in step S12 of FIG.8), the primary determination part 94 inputs the dimensionless integral pressure value P' into the secondary determination part 95 as the output P", and the secondary determination part 95 determines occurrence of abnormality (in step S14 of FIG.8). Specifically, the abnormality determination part 74 is configured to determine, when the opening-closing command is not provided for the high-pressure valve 28 and the low-pressure valve 30 and the dimensionless integral pressure value P' exceeds the first threshold, occurrence of abnormality (continuous juddering) that the high-pressure valve 28 stays open without being able to be closed in the entire cycle of the reciprocating motion of the piston 22.

In contrast, in the case where the valve opening-closing command value I' is greater than the threshold (40% in the example shown in FIG.8) and it is determined that the opening-closing command is provided for the high-pressure valve 28 and the low-pressure valve 30 (determined as YES in step S11 of FIG.8), the determination process performed by the abnormality determination part 74 is as follows.

When the valve opening-closing command value I' is greater than the threshold (40% in the example shown in FIG.8), the primary determination part 94 inputs the dimensionless integral pressure value P' into the secondary determination part 95 as the output P" (in step S15 of FIG.8). Then, in the case where the output P" of the primary determination part 95 exceeds the first threshold (80% in the example shown in FIG.8) (when determined as YES in step S16), the secondary determination part 95 determines occurrence of continuous juddering (in step S17). Further, the secondary determination part 95 is configured to determine, when the output P" of the primary determination part 95 exceeds an upper limit of a prescribed range (40% < P" < 60% in the example shown in FIG.8) (when determined as YES in step S18), occurrence of the abnormality (intermittent juddering) in which the high-pressure valve 28 is closed later than the prescribed timing. Furthermore, the secondary determination part 95 is configured to determine, when the output P" of the primary determination part 95 is within the prescribed range (40% < P" < 60% in the example shown in FIG.8) (when determined as YES in step S20), that the high-pressure valve 28 and the low-pressure valve 30 are normal. Moreover, the secondary determination part 95 is configured to determine, when the output P" of the primary determination part 95 is below a lower limit of the prescribed range (40% < P" < 60% in the example shown in FIG.8) (when determined as NO in step S20), occurrence of the abnormality (early closing) where the high-pressure valve 28 is earlier than the prescribed timing or occurrence of the abnormality (latch fail) where the low-pressure valve 30 is closed later than the prescribed timing and thus the high-pressure valve 28 cannot be opened at the prescribed timing. In some embodiments, in the case where the output P" of the primary determination part 95 is greater than a threshold which is below the lower limit of the prescribed range (10% in the example shown in FIG.8) (determined as YES in step S22), the secondary determination part 95 determines occurrence of the early closing (in step S23), and in the case where the output P" of the primary determination part 95 is less than the threshold which is the lower limit of the prescribed range (10% in the example shown in FIG.8) (determined as NO in step S22), the secondary determination part 95 determines occurrence of the latch fail (in step S24).

In addition, as shown in FIG.5, in some embodiments, a variables output part 97 may be provided to output information relating to the pressure of the working chamber 24 detected by the pressure sensor 27 (the dimensionless integral pressure value P' in the example shown in FIG.5) to the control unit 100 of the hydraulic motor 10, and the information serves as variables for feedback control for at least one of the high-pressure valve 28 or the low-pressure valve 30. The control unit 100 may compute the opening-closing command (for example, opening-closing timing (the timing of excitation and non-excitation of the solenoid 42, 54)) to at least one of the high-pressure valve 28 or the low-pressure valve 30 by using a PI controller 98 so that the dimensionless integral pressure value P' (variables for feedback control) received from the variables output part 97 may approach a target value P*, and this opening-closing command may be outputted to a valve opening-closing command part 99.

In some examples which are not part of the invention, the diagnostic system 70 of the hydraulic machine further comprises a duty ratio calculation part configured to calculate a duty ratio which indicates a ratio of a period when the measurement value of the pressure of the working chamber 24 detected by the pressure sensor 72 is not less than the prescribed value to a period of the reciprocating motion of the piston 22. The abnormality determination part 74 is configured to determine abnormality of the hydraulic machine by at least considering whether or not the duty ratio calculated by the duty ratio calculation part is within a prescribed range.

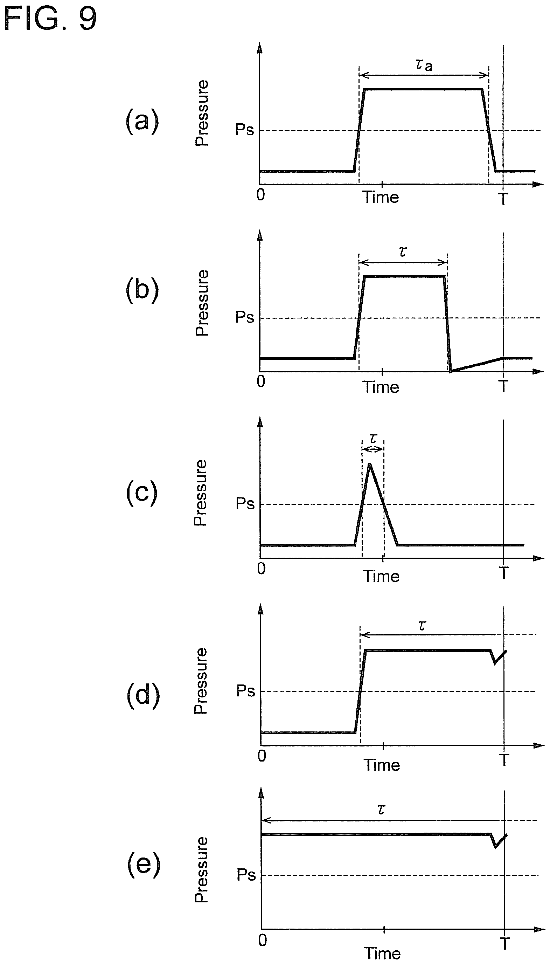

In FIG.9, (a) to (e) are graphs each visually illustrating the duty ratio in a pressure waveform detected by the pressure sensor 72. In FIG.9 (a) to (e), the duty ratio (τ/T) is a ratio of the period τ when the measurement value of the pressure of the working chamber 24 detected by the pressure sensor 72 is not less than the prescribed value to the period T of the reciprocating motion of the piston 22.

A prescribed range may be may be defined using the ratio τₐ/T of the case shown in FIG.9(a) where the cylinder is in normal state. For example, when the difference between the duty ratio τ/T calculated based on the measurement value of the pressure and the ratio τₐ/T is within 15% on the basis of τₐ/T, it is determined that the cylinder is in a normal state. When the difference exceeds 15%, it is determined that the cylinder is in an abnormal state. Further, FIG.9 (b) to (e) show the duty ratios in the case of (b) early closing, (c) latch fail, (d) intermittent juddering and (e) continuous juddering, respectively.

In some examples which are not part of the invention, the abnormality determination part 74 is configured to compare, regarding at least one cycle of the reciprocating motion of the piston 22, an actual pressure waveform of the working chamber 24 detected by the pressure sensor 27 with an ideal normal pressure waveform which is predicted from an opening-closing command provided for at least one of the high-pressure valve 28 or the low-pressure valve 30 so as to determine abnormality of the hydraulic machine based on deviation of the actual pressure waveform from the ideal pressure waveform.

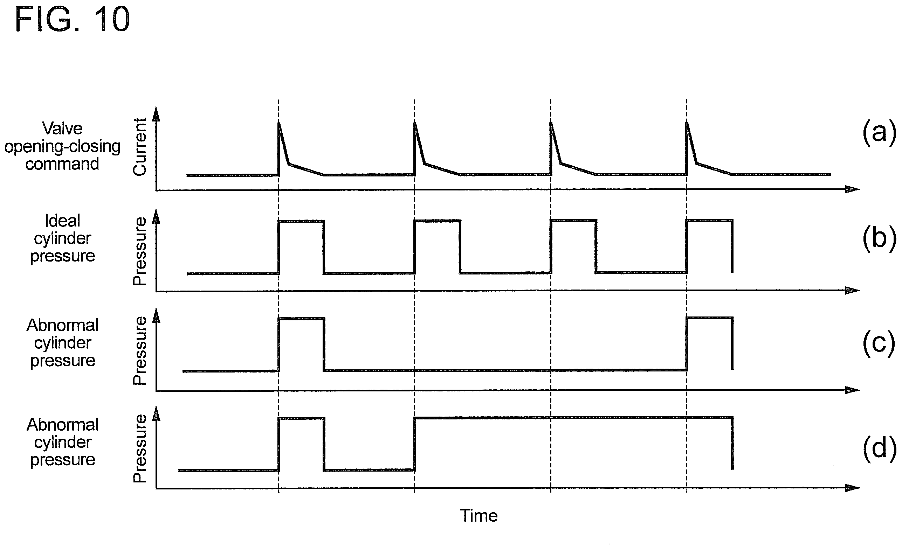

FIG.10(a) is a graph schematically illustrating the valve opening-closing command, and FIG.10(b) to (d) show waveforms of the pressure of the working chamber (the cylinder pressure) detected by the pressure sensor 72 when the valve opening-closing command of FIG.10(a) is provided. FIG.10 (b) shows the ideal pressure waveform predicted from the valve opening-closing command of FIG.10 (a). FIG.10(c) and (d) show pressure waveforms of the case where abnormality occurs.

The waveform of the pressure (cylinder pressure) of the working chamber 24 detected by the pressure sensor 72 is, for instance, compared to the ideal pressure waveform in viewpoints such as the number of peaks in the pressure waveform per each cycle of the piston 22, the maximum pressure and the average pressure. If the pressure waveform having significant deviation from the ideal waveform as shown in FIG.10 (c) and (d), it is determined that abnormality has occurred in the hydraulic machine.

In some examples which are not part of the invention, the abnormality determination part 74 is configured to determine abnormality of the high-pressure valve 28 and the low-pressure valve 30 based on a delay time TD of pressure change of the working chamber 24 caused by opening or closing of the at least one of the high-pressure valve 28 or the low-pressure valve 30 with respect to a timing of supplying the opening-closing control signal (HPV control signal or LPV control signal) to at least one of the high-pressure valve 28 or the low-pressure valve 30 from the control unit 100 of the hydraulic machine.

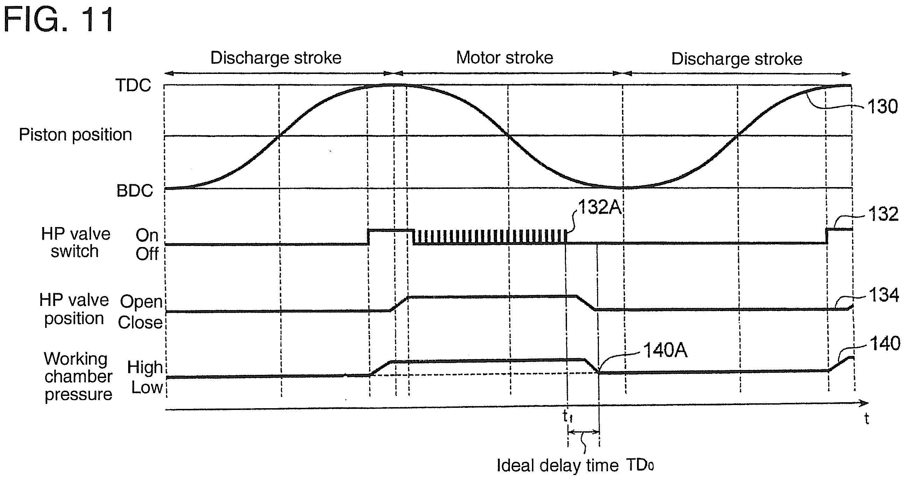

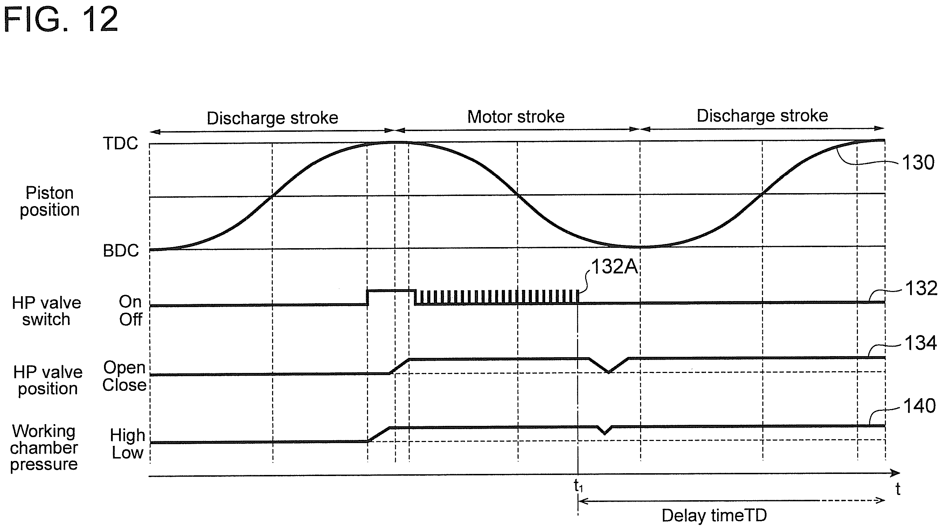

FIG.11 is a chart showing a relationship between the cylinder pressure and the HPV control signal to the high-pressure valve 28 during the normal operation of the hydraulic machine. FIG.12 is a chart showing a relationship between the cylinder pressure and the HPV control signal to the high-pressure valve 28 during an abnormal operation of the hydraulic machine.

As illustrated in FIG.11, at time t₁, the solenoid 42 of the high-pressure valve 28 is unexcited by the HPV control signal 132A, and then before the piston 22 reaches the bottom dead center, the high-pressure valve 28 is closed and immediately after this, the low-pressure valve 30 whose solenoid 53 is unexcited is now opened, whereby the cylinder pressure declines. In contrast, in the example shown in FIG.12, although the solenoid 42 of the high-pressure valve 28 is unexcited by the HPV control signal 132A at time t₁, the high-pressure valve 28 cannot be closed before the piston 22 reaches the bottom dead center. As a result, in spite of being in the non-excitation state, the low-pressure valve 30 cannot open due to the fluid differential pressure acting on both sides of the valve element 48 of the low-pressure valve 30 and thus, the cylinder pressure remains high even at the bottom dead center of the piston 22.

Therefore, compared to the delay time (ideal delay time TD₀) until the cylinder pressure actually falls from the transmitting time of a valve closing command (HPV control signal 132A) to the high-pressure valve 28 in the chart shown in FIG.11, the delay time (ideal delay time TD) until the cylinder pressure actually falls from the transmitting time of the valve closing command (HPV control signal 132A) to the high-pressure valve 28 in the chart shown in FIG.12 is significantly long. Thus, by comparing the delay time TD and the ideal delay time TD₀ of the pressure change of the working chamber 24 from the transmitting time of the opening-closing control signal (HPV control signal or LPV control signal) from the control unit 100, abnormality of the high-pressure valve 28 and the low-pressure valve 30 can be determined based on the deviation of the delay time TD from the ideal delay time TD₀.

In the diagnostic system 70 of the hydraulic machine illustrated in FIG.5, the integration part 76, the dimensionless integral pressure obtaining part 78 and the abnormality determination part 74 are configured by FPGA (Field Programmable Gate Array) 90.

For instance, the hydraulic motor 10 has twelve cylinders 20, the rotation shaft 32 rotates at 1000rpm, and the diagnostic system performs the abnormality determination of the hydraulic machine for each of the cylinders 20 every rotation of the rotation shaft 32. In this case, the abnormality determination needs to be performed 200 times per second. Therefore, by configuring the integration part 76, the dimensionless integral pressure obtaining part 78 and the abnormality determination part 74 by FPGA (Field Programmable Gate Array) 90 which is capable of high-speed parallel processing, the above-described abnormality determination of the hydraulic machine can be performed at high speed.

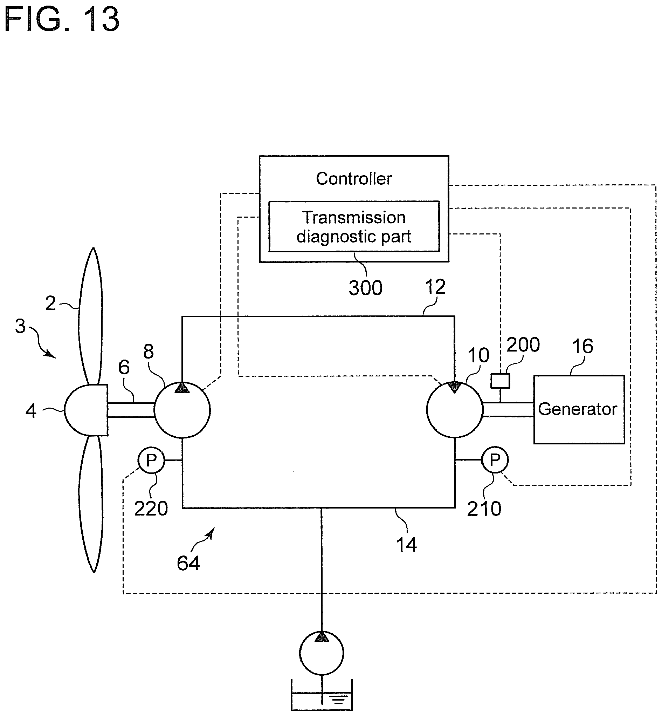

FIG.13 is an illustration of the configuration of the hydraulic machine according to one embodiment.

In some embodiments, the hydraulic transmission 64 comprises: a rotation speed sensor 200 for detecting a rotation speed of the hydraulic motor 10; a first pressure sensor 210 provided at a first position in the low-pressure line 14 on the hydraulic motor 24 side to detect a pressure of the low-pressure line 14 at the first position; and a second pressure sensor 220 provided at a second position in the low-pressure line 14 on the hydraulic pump 8 side to detect a pressure of the low-pressure line 14 at the second position.

The hydraulic transmission 64 further comprises a transmission diagnostic part 300 which is configured to diagnose abnormality of the hydraulic transmission 64 based on detection results of the rotation speed sensor 200, the first pressure sensor 210 and the second pressure sensor 220.

The transmission diagnostic part 300 is configured to obtain a first estimated flow rate Q₁ in the low-pressure line 14 based on the rotation speed of the hydraulic motor 10 detected by the rotation speed sensor 200 and displacement of the hydraulic motor 10. More specifically, the transmission diagnostic part 300 computes the first estimated flow rate Q₁ using the formula, Q1 = n_{M} × FD_{M} × Vg_{M} × N_{M}, wherein n_{M} is the total number of the pistons of the hydraulic motor 10, FD_{M} is a ratio of the current displacement to the maximum displacement of the hydraulic motor 10 (a ratio of the number of active working chambers to the total number of the cylinders), Vg_{M} is a piston displacement volume per cylinder, N_{M} is the rotation speed of the hydraulic motor 10.

Further, the transmission diagnostic part 300 is configured to obtain a second estimated flow rate Q₂ in the low-pressure line 14 based on a pressure difference between the pressure in the low-pressure line 14 at the first position detected by the first pressure sensor 210 and the pressure in the low-pressure line 14 at the second position detected by the second pressure sensor 220, and a flow resistance in the low-pressure line 14 between the first position and the second position. For example, the flow resistance of the low-pressure line 14 between the first position and the second position is measured, and the expression of relation between the pressure difference between the first position and the second position and the flow rate of the operating fluid passing through the low-pressure line 14 is obtained beforehand. And the transmission diagnostic part 300 applies the difference between the pressure detected by the first pressure sensor 210 at the first position and the pressure detected by the second pressure sensor 220 at the second position to this relation expression obtained beforehand, so as to estimate the flow rate in the low pressure line 14.

Based on the difference between the first estimated flow rate Q₁ and the second estimated flow rate Q₂ obtained in the above manner, the transmission diagnostic part 300 determines abnormality of the hydraulic transmission 64.

If the whole hydraulic transmission 64 including various sensors (the rotation speed sensor 200, the first pressure sensor 210, the second pressure sensor 220, etc.) is functioning normally, the first estimated flow rate Q₁ should be equal to the second estimated flow rate Q₂. On the other hand, if there is difference between the first estimated flow rate Q₁ and the second estimated flow rate Q₂, it can be estimated that the measurement result of devices (such as the rotation speed sensor 200 and the pressure sensors 210, 220) used to estimate the flow rate or the parameter required to compute the estimated flow rate (such as a displacement ratio FD_{M} defining the displacement volume of the hydraulic motor 10) is different from the actual value. Specifically, failure can be estimated in one or some of the measuring devices or the devices that constitute the hydraulic motor 10. Therefore, it is possible to determine abnormality of the hydraulic transmission based on the difference between the first estimated flow rate Q₁ and the second estimated flow rate Q₂.

### [Reference Signs list]

- 1: Wind turbine generator
- 2: Blade
- 3: Rotor
- 4: Hub
- 6: Rotation shaft
- 8: Hydraulic pump
- 10: Hydraulic motor
- 12: High-pressure line
- 14: Low-pressure line
- 16: Generator
- 18: Nacelle
- 19: Tower
- 20: Cylinder
- 22: Piston
- 24: Working chamber
- 25: Converting mechanism
- 26: Cam
- 28: High-pressure valve
- 30: Low-pressure valve
- 32: Rotation shaft (Hydraulic motor)
- 34: High-pressure communication line
- 35: Valve element
- 36: Low-pressure communication line
- 40: Movable unit
- 42: Solenoid coil
- 44: Spring
- 46: Valve seat
- 48: Valve element
- 50: Armature
- 52: Movable unit
- 54: Solenoid
- 56: Spring
- 58: Valve seat
- 64: Hydraulic transmission
- 70: Diagnostic system
- 72: Pressure sensor
- 74: Abnormality determination part
- 90: FPGA
- 100: Control unit
- 110: Control/monitoring device
- 200: Rotation speed sensor
- 210: First pressure sensor
- 220: Second pressure sensor
- 300: Transmission diagnostic part

## Claims

1. A diagnostic system configured to determine abnormality of a hydraulic machine which comprises a rotation shaft (32), a cylinder (20), a piston (22) forming a working chamber (24) with the cylinder, a high-pressure valve (28) and a low-pressure valve (30) provided for the working chamber, and a converting mechanism (25) for converting between rotational motion of the rotation shaft (32) and reciprocating motion of the piston (22), the diagnostic system comprising:
a pressure sensor (72) for detecting a pressure of the working chamber (24); and
an abnormality determination part (74) for determining abnormality of the hydraulic machine based on a detection result of the pressure sensor (72);
**characterized in that** the diagnostic system further comprises
an integration part (76) for integrating measurement values of the pressure of the working chamber detected by the pressure sensor (72) in correspondence to a reciprocating motion cycle of the piston (22) to calculate an integral value; and
a dimensionless integral pressure obtaining part (78) for calculating a dimensionless integral pressure value (P') which indicates a ratio of the integral value calculated by the integration part to a product of a period of the reciprocating motion of the piston and a pressure of a high-pressure line (12) connected to the hydraulic machine for communication with the working chamber via the high-pressure valve (28),
wherein the abnormality determination part (74) is configured to determine abnormality of the hydraulic machine by at least considering whether or not the dimensionless integral pressure value (P') is within a prescribed range.

2. The diagnostic system for the hydraulic machine according to claim 1, wherein, in the case where a valve opening-closing command is not provided for the high-pressure valve (28) and the low-pressure valve (30), the abnormality determination part (74) is configured to determine, when the dimensionless integral pressure value (P') exceeds a first threshold, occurrence of abnormality in which the high-pressure valve (28) stays open without being able to be closed in the entire cycle of the reciprocating motion of the piston (22).

3. The diagnostic system for the hydraulic machine according to claim 2, wherein, in the case where the valve opening-closing command is provided for at least one of the high-pressure valve (28) or the low-pressure valve (30), the abnormality determination part (74) is configured to:
when the dimensionless integral pressure value (P') is within the prescribed range, determine that the high-pressure valve (28) and the low-pressure valve (30) are normal;
when the dimensionless integral pressure value (P') exceeds an upper limit of the prescribed range, determine that the high-pressure valve (28) is closed later than a prescribed timing; and
when the dimensionless integral pressure value (P') is below a lower limit of the prescribed range, determine that the high-pressure valve (28) is closed ahead of the prescribed timing or that the low-pressure valve (30) is closed later than a prescribed timing and thus the high-pressure valve (28) is not opened at a prescribed timing.

4. The diagnostic system for the hydraulic machine according to any one of claims 1 to 3,
wherein the integration part (76), the dimensionless integral pressure obtaining part (78) and the abnormality determination part (74) are configured by FPGA.

5. The diagnostic system for the hydraulic machine according to any one of claims 1 to 4, further comprising:
a variables output part (97) configured to output information relating to the pressure of the working chamber (24) detected by the pressure sensor (72) to a control unit (100) of the hydraulic machine, the information serving as variables for feedback control for at least one of the high-pressure valve (28) or the low-pressure valve (30).

6. A hydraulic transmission comprising:
a hydraulic pump (8) configured to generate pressure oil;
a hydraulic motor (10) configured to be driven by the pressure oil from the hydraulic pump;
a high-pressure line (12) connecting a discharge port of the hydraulic pump and an intake port of the hydraulic motor;
a low-pressure line (14) connecting a discharge port of the hydraulic motor and an intake port of the hydraulic pump; and
a hydraulic machine diagnostic part including the diagnostic system described in any one of claims 1 to 6 and configured to diagnose abnormality of at least one of the hydraulic pump (8) or the hydraulic motor (10).

7. The hydraulic transmission according to claim 6, further comprising:
a rotation speed sensor (200) configured to detect a rotation speed of the hydraulic motor (10);
a first pressure sensor (210) provided at a first position in the low-pressure line (14) on a hydraulic motor side to detect a pressure of the low-pressure line (14) at the first position;
a second pressure sensor (220) provided at a second position in the low-pressure line (14) on a hydraulic pump side to detect a pressure of the low-pressure line (14) at the second position; and
a transmission diagnostic part (300) configured to diagnose abnormality of the hydraulic transmission based on detection results of the rotation speed sensor (200), the first pressure sensor (210) and the second pressure sensor (220),
wherein the transmission diagnostic part (300) is configured to:
obtain a first estimated flow rate in the low-pressure line (14) based on the rotation speed of the hydraulic motor (10) detected by the rotation speed sensor (200) and displacement of the hydraulic motor;
obtain a second estimated flow rate in the low-pressure line (14) based on a pressure difference between the pressure in the low-pressure line at the first position detected by the first pressure sensor (210) and the pressure in the low-pressure line at the second position detected by the second pressure sensor (220), and a flow resistance in the low-pressure line (14) between the first position and the second position; and
determine abnormality of the hydraulic transmission (64) based on a difference between the first estimated flow rate and the second estimated flow rate.

8. A wind turbine generator comprising:
the hydraulic transmission (64) described in claim 6 or 7;
a wind turbine rotor (3) configured to input mechanical energy to the hydraulic pump (8) of the hydraulic transmission; and
a generator (16) configured to be driven by the hydraulic motor (10) of the hydraulic transmission (64).

9. A diagnostic method for a hydraulic machine which comprises a rotation shaft (32), a cylinder (20), a piston (22) forming a working chamber (24) with the cylinder, a high-pressure valve (28) and a low-pressure valve (30) provided for the working chamber, and a converting mechanism (25) for converting between rotational motion of the rotation shaft and reciprocating motion of the piston (22), the diagnostic method comprising:
a pressure detection step for detecting a pressure of the working chamber (24); and an abnormality determination step of determining abnormality of the hydraulic machine based on a detection result of the pressure detection step,
an integration step for integrating measurement values of the pressure of the working chamber (24) detected in the pressure detection step in correspondence to a reciprocating motion cycle of the piston (22) so as to calculate an integral value; and
a dimensionless integral pressure obtaining step for calculating a dimensionless integral pressure value (P') which indicates a ratio of the integral value calculated in the integration step to a product of a period of the reciprocating motion of the piston (22) and a pressure of a high-pressure line (12) connected to the hydraulic machine for communication with the working chamber (24) via the high-pressure valve (28),
wherein, in the abnormality determination step, abnormality of the hydraulic machine is determined by at least considering whether or not the dimensionless integral pressure value (P') is within a prescribed range.

## Patentansprüche

1. Diagnosesystem das zum Bestimmen einer Abnormität einer Hydraulikmaschine, die eine Drehwelle (32), einen Zylinder (20), einen Kolben (22), der mit dem Zylinder eine Arbeitskammer (24) bildet, ein Hochdruckventil (28) und ein Niederdruckventil (30), die für die Arbeitskammer vorgesehen sind ausgebildet ist, und einen Umwandlungsmechanismus (25) zur Umwandlung zwischen Drehbewegung der Drehwelle (32) und Hin- und Herbewegung des Kolbens (22) umfasst, wobei das Diagnosesystem umfasst:
einen Drucksensor (72) zum Detektieren eines Drucks der Arbeitskammer (24), und
einen Abnormitätsbestimmungsteil (74) zum Bestimmen einer Abnormität der Hydraulikmaschine basierend auf einem Detektierergebnis des Drucksensors (72),
**dadurch gekennzeichnet, dass** das Diagnosesystem ferner umfasst:
einen Integrierteil (76) zum Integrieren von Messwerten des Drucks der Arbeitskammer, der durch den Drucksensor (72) detektiert wird, entsprechend einem Hin- und Herbewegungszyklus des Kolbens (22), um einen Integralwert zu berechnen, und
einen Ermittlungsteil (78) für einen dimensionslosen integrierten Druck zum Berechnen eines dimensionslosen integrierten Druckwerts (P'), der ein Verhältnis des durch den Integrierteil berechneten integrierten Werts zu einem Produkt aus einer Periode der Hin- und Herbewegung des Kolbens und einem Druck einer Hochdruckleitung (12), die mit der Hydraulikmaschine zur Kommunikation mit der Arbeitskammer über das Hochdruckventil (28) verbunden ist, angibt,
wobei der Abnormitätsbestimmungsteil (74) dazu ausgebildet ist, eine Abnormität der Hydraulikmaschine mindestens durch Berücksichtigen, ob sich der dimensionslose integrierte Druckwert (P') innerhalb eines vorgegebenen Bereichs befindet oder nicht, zu bestimmen.

2. Diagnosesystem für die Hydraulikmaschine nach Anspruch 1,
wobei in dem Fall, in dem ein Ventil-Öffnen-Schließen-Befehl nicht für das Hochdruckventil (28) und das Niederdruckventil (30) bereitgestellt wird, der Abnormitätsbestimmungsteil (74) dazu ausgebildet ist, wenn der dimensionslose integrierte Druckwert (P') eine erste Schwelle überschreitet, das Auftreten einer Abnormität zu bestimmen, bei der das Hochdruckventil (28) in dem gesamten Zyklus der Hin- und Herbewegung des Kolbens (22) offen bleibt, ohne geschlossen werden zu können.

3. Diagnosesystem für die Hydraulikmaschine nach Anspruch 2, wobei in dem Fall, in dem der Ventil-Öffnen-Schließen-Befehl für mindestens eines aus der Gruppe umfassend das Hochdruckventil (28) und das Niederdruckventil (30) bereitgestellt wird, der Abnormitätsbestimmungsteil (74) dazu ausgebildet ist:
wenn sich der dimensionslose integrierte Druckwert (P') innerhalb des vorgegebenen Bereichs befindet, zu bestimmen, dass das Hochdruckventil (28) und das Niederdruckventil (30) normal sind,
wenn der dimensionslose integrierte Druckwert (P') eine obere Grenze des vorgegebenen Bereichs überschreitet, zu bestimmen, dass das Hochdruckventil (28) später als zu einem vorgegebenen Zeitpunkt geschlossen wird, und,
wenn der dimensionslose integrierte Druckwert (P') eine untere Grenze des vorgegebenen Bereichs unterschreitet, zu bestimmen, dass das Hochdruckventil (28) vor einem vorgegebenen Zeitpunkt geschlossen wird oder dass das Niederdruckventil (30) später als zu einem vorgegebenen Zeitpunkt geschlossen wird und somit das Hochdruckventil (28) nicht zu einem vorgegebenen Zeitpunkt geöffnet wird.

4. Diagnosesystem für die Hydraulikmaschine nach einem beliebigen der Ansprüche 1 bis 3,
wobei der Integrierteil (76), der Ermittlungsteil (78) für dimensionslosen integrierten Druck und der Abnormitätsbestimmungsteil (74) mittels FPGA konfiguriert werden.

5. Diagnosesystem für die Hydraulikmaschine nach einem beliebigen der Ansprüche 1 bis 4, ferner umfassend:
einen Variablenausgabeteil (97), der dazu ausgebildet ist, Informationen bezüglich des Drucks der Arbeitskammer (24), der durch den Drucksensor (72) detektiert wird, zu einer Steuerungseinheit (100) der Hydraulikmaschine auszugeben, wobei die Informationen als Variable zur Regelung für mindestens eines aus der Gruppe umfassend das Hochdruckventil (28) und das Niederdruckventil (30) dienen.

6. Hydraulisches Getriebe, umfassend:
eine Hydraulikpumpe (8), die dazu ausgebildet ist, Drucköl zu erzeugen,
einen Hydraulikmotor (10), der dazu ausgebildet ist, durch das Drucköl von der Hydraulikpumpe angetrieben zu werden,
eine Hochdruckleitung (12), die eine Auslassöffnung der Hydraulikpumpe und eine Einlassöffnung des Hydraulikmotors verbindet,
eine Niederdruckleitung (14), die eine Auslassöffnung des Hydraulikmotors und eine Einlassöffnung der Hydraulikpumpe verbindet, und
einen Hydraulikmaschinen-Diagnoseteil, der das Diagnosesystem umfasst, das in einem beliebigen der Ansprüche 1 bis 6 beschrieben wird und dazu ausgebildet ist, eine Abnormität von mindestens einem aus der Gruppe umfassend die Hydraulikpumpe (8) und den Hydraulikmotor (10) zu diagnostizieren.

7. Hydraulisches Getriebe nach Anspruch 6, ferner umfassend:
einen Drehzahlsensor (200), der dazu ausgebildet ist, eine Drehzahl des Hydraulikmotors (10) zu detektieren,
einen ersten Drucksensor (210), der an einer ersten Position in der Niederdruckleitung (14) auf einer Hydraulikmotorseite vorgesehen ist, um einen Druck der Niederdruckleitung (14) an der ersten Position zu detektieren,
einen zweiten Drucksensor (220), der an einer zweiten Position in der Niederdruckleitung (14) auf einer Hydraulikpumpenseite vorgesehen ist, um einen Druck der Niederdruckleitung (14) an der zweiten Position zu detektieren, und
einen Getriebediagnoseteil (300), der dazu ausgebildet ist, eine Abnormität des hydraulischen Getriebes basierend auf Detektierergebnissen des Drehzahlsensors (200), des ersten Drucksensors (210) und des zweiten Drucksensors (220) zu diagnostizieren,
wobei der Getriebediagnoseteil (300) dazu ausgebildet ist:
eine erste geschätzte Durchflussrate in der Niederdruckleitung (14) basierend auf der Drehzahl des Hydraulikmotors (10), die durch den Drehzahlsensor (200) detektiert wird, und dem Schluckvolumen des Hydraulikmotors zu ermitteln,
eine zweite geschätzte Durchflussrate in der Niederdruckleitung (14) basierend auf einer Druckdifferenz zwischen dem Druck in der Niederdruckleitung an der ersten Position, der durch den ersten Drucksensor (210) detektiert wird, und dem Druck in der Niederdruckleitung an der zweiten Position, der durch den zweiten Drucksensor (220) detektiert wird, und einem Strömungswiderstand in der Niederdruckleitung (14) zwischen der ersten Position und der zweiten Position zu ermitteln und
eine Abnormität des hydraulischen Getriebes (64) basierend auf einer Differenz zwischen der ersten geschätzten Durchflussrate und der zweiten geschätzten Durchflussrate zu bestimmen.

8. Windkraftanlage, umfassend:
das in Anspruch 6 oder 7 beschriebene hydraulische Getriebe (64),
einen Windturbinenrotor (3), der dazu ausgebildet ist, der Hydraulikpumpe (8) des hydraulischen Getriebes mechanische Energie zuzuführen, und
einen Generator (16), der dazu ausgebildet ist, durch den Hydraulikmotor (10) des hydraulischen Getriebes (64) angetrieben zu werden.

9. Diagnoseverfahren für eine Hydraulikmaschine, die eine Drehwelle (32), einen Zylinder (20), einen Kolben (22), der mit dem Zylinder eine Arbeitskammer (24) bildet, ein Hochdruckventil (28) und ein Niederdruckventil (30), die für die Arbeitskammer vorgesehen sind, und einen Umwandlungsmechanismus (25) zur Umwandlung zwischen Drehbewegung der Drehwelle und Hin- und Herbewegung des Kolbens (22) umfasst, wobei das Diagnoseverfahren umfasst:
einen Druckdetektierschritt zum Detektieren eines Drucks der Arbeitskammer (24), und
einen Abnormitätsbestimmungsschritt zum Bestimmen einer Abnormität der Hydraulikmaschine basierend auf einem Detektierergebnis des Druckdetektierschritts,
einen Integrierschritt zum Integrieren von Messwerten des Drucks der Arbeitskammer (24), der in dem Druckdetektierschritt detektiert wird, entsprechend einem Hin- und Herbewegungszyklus des Kolbens (22), um einen Integralwert zu berechnen, und
einen Ermittlungsschritt für dimensionslosen integrierten Druck zum Berechnen eines dimensionslosen integrierten Druckwerts (P'), der ein Verhältnis des integrierten Werts, der in dem Integrierschritt berechnet wird, zu einem Produkt aus einer Periode der Hin- und Herbewegung des Kolbens (22) und einem Druck einer Hochdruckleitung (12), die mit der Hydraulikmaschine zur Kommunikation mit der Arbeitskammer (24) über das Hochdruckventil (28) verbunden ist, angibt,
wobei, in dem Abnormitätsbestimmungsschritt, eine Abnormität der Hydraulikmaschine mindestens durch Berücksichtigen, ob sich der dimensionslose integrierte Druckwert (P') innerhalb eines vorgegebenen Bereichs befindet oder nicht, bestimmt wird.

## Revendications

1. Système de diagnostic configuré pour déterminer une anomalie d'une machine hydraulique qui comprend un arbre rotatif (32), un cylindre (20), un piston (22) formant une chambre de travail (24) avec le cylindre, une vanne haute pression (28) et une vanne basse pression (30) prévues pour la chambre de travail, et un mécanisme de conversion (25) pour effectuer une conversion entre un mouvement de rotation de l'arbre rotatif (32) et un mouvement de va-et-vient du piston (22), le système de diagnostic comprenant :
un capteur de pression (72) pour détecter une pression de la chambre de travail (24) ; et
une partie de détermination d'anomalie (74) pour déterminer une anomalie de la machine hydraulique sur la base d'un résultat de détection du capteur de pression (72) ;
**caractérisé en ce que** le système de diagnostic comprend en outre
une partie d'intégration (76) pour intégrer les valeurs de mesure de la pression de la chambre de travail détectée par le capteur de pression (72) en correspondance avec un cycle de mouvement de va-et-vient du piston (22) pour calculer une valeur intégrale ; et
une partie d'obtention de pression intégrale sans dimensions (78) pour calculer une valeur de pression intégrale sans dimensions (P') qui indique un rapport entre la valeur intégrale calculée par la partie d'intégration et un produit d'une période du mouvement de va-et-vient du piston et d'une pression d'une ligne haute pression (12) reliée à la machine hydraulique pour la communication avec la chambre de travail par l'intermédiaire de la vanne haute pression (28),
dans lequel la partie de détermination d'anomalie (74) est configurée pour déterminer une anomalie de la machine hydraulique en prenant en considération au moins le fait que la valeur de pression intégrale sans dimensions (P') est, ou non, dans les limites d'une plage prescrite.

2. Système de diagnostic pour la machine hydraulique selon la revendication 1,
dans lequel, dans le cas où une commande d'ouverture/fermeture de vanne n'est pas fournie pour la vanne haute pression (28) et la vanne basse pression (30), la partie de détermination d'anomalie (74) est configurée pour déterminer, lorsque la valeur de pression intégrale sans dimensions (P') dépasse un premier seuil, l'apparition d'une anomalie dans laquelle la vanne haute pression (28) reste ouverte sans pouvoir être fermée pendant le cycle entier du mouvement de va-et-vient du piston (22).

3. Système de diagnostic pour la machine hydraulique selon la revendication 2,
dans lequel, dans le cas où la commande d'ouverture/fermeture de vanne est fournie pour au moins l'une de la vanne haute pression (28) ou de la vanne basse pression (30), la partie de détermination d'anomalie (74) est configurée pour :
lorsque la valeur de pression intégrale sans dimensions (P') est dans les limites de la plage prescrite, déterminer que la vanne haute pression (28) et la vanne basse pression (30) sont normales ;
lorsque la valeur de pression intégrale sans dimensions (P') dépasse une limite supérieure de la plage prescrite, déterminer que la vanne haute pression (28) a été fermée plus tard qu'un temps prescrit ; et
lorsque la valeur de pression intégrale sans dimensions (P') est inférieure à une limite inférieure de la plage prescrite, déterminer que la vanne haute pression (28) a été fermée avant le temps prescrit ou que la vanne basse pression (30) a été fermée plus tard qu'un temps prescrit, et ainsi que la vanne haute pression (28) n'a pas été ouverte selon un temps prescrit.

4. Système de diagnostic pour la machine hydraulique selon l'une quelconque des revendications 1 à 3,
dans lequel la partie d'intégration (76), la partie d'obtention de pression intégrale sans dimensions (78) et la partie de détermination d'anomalie (74) sont configurées par un FPGA.

5. Système de diagnostic pour la machine hydraulique selon l'une quelconque des revendications 1 à 4, comprenant en outre :
une partie de sortie de variables (97) configurée pour délivrer des informations relatives à la pression de la chambre de travail (24) détectée par le capteur de pression (72) à une unité de commande (100) de la machine hydraulique, les informations servant de variables pour une commande à rétroaction pour au moins l'une de la vanne haute pression (28) ou de la vanne basse pression (30).

6. Transmission hydraulique comprenant :
une pompe hydraulique (8) configurée pour générer une huile sous pression ;
un moteur hydraulique (10) configuré pour être entraîné par l'huile sous pression provenant de la pompe hydraulique ;
une conduite haute pression (12) reliant un orifice de refoulement de la pompe hydraulique et un orifice d'admission du moteur hydraulique ;
une conduite basse pression (14) reliant un orifice de refoulement du moteur hydraulique et un orifice d'admission de la pompe hydraulique ; et
une partie de diagnostic de machine hydraulique comprenant le système de diagnostic décrit dans l'une quelconque des revendications 1 à 6 et configurée pour diagnostiquer une anomalie d'au moins l'une de la pompe hydraulique (8) ou du moteur hydraulique (10).

7. Transmission hydraulique selon la revendication 6, comprenant en outre :
un capteur de vitesse de rotation (200) configuré pour détecter une vitesse de rotation du moteur hydraulique (10) ;
un premier capteur de pression (210) prévu à une première position dans la conduite basse pression (14) d'un côté de moteur hydraulique pour détecter une pression de la conduite basse pression (14) à la première position ;
un deuxième capteur de pression (220) prévu à une deuxième position dans la conduite basse pression (14) d'un côté de pompe hydraulique pour détecter une pression de la conduite basse pression (14) à la deuxième position ; et
une partie de diagnostic de transmission (300) configurée pour diagnostiquer une anomalie de la transmission hydraulique sur la base des résultats de détection du capteur de vitesse de rotation (200), du premier capteur de pression (210) et du deuxième capteur de pression (220),
dans laquelle la partie de diagnostic de transmission (300) est configurée pour :
obtenir un premier débit estimé dans la conduite basse pression (14) sur la base de la vitesse de rotation du moteur hydraulique (10) détectée par le capteur de vitesse de rotation (200) et du déplacement du moteur hydraulique ;
obtenir un deuxième débit estimé dans la conduite basse pression (14) sur la base d'une différence de pression entre la pression dans la conduite basse pression à la première position détectée par le premier capteur de pression (210) et la pression dans la conduite basse pression à la deuxième position détectée par le deuxième capteur de pression (220), et d'une résistance à l'écoulement dans la conduite basse pression (14) entre la première position et la deuxième position ; et
déterminer une anomalie de la transmission hydraulique (64) sur la base d'une différence entre le premier débit estimé et le deuxième débit estimé.

8. Eolienne comprenant :
la transmission hydraulique (64) décrite dans la revendication 6 ou 7 ;
un rotor d'éolienne (3) configuré pour appliquer une énergie mécanique à la pompe hydraulique (8) de la transmission hydraulique ; et
un générateur (16) configuré pour être entraîné par le moteur hydraulique (10) de la transmission hydraulique (64).

9. Procédé de diagnostic pour une machine hydraulique qui comprend un arbre rotatif (32), un cylindre (20), un piston (22) formant une chambre de travail (24) avec le cylindre, une vanne haute pression (28) et une vanne basse pression (30) prévues pour la chambre de travail, et un mécanisme de conversion (25) pour effectuer une conversion entre un mouvement de rotation de l'arbre rotatif et un mouvement de va-et-vient du piston (22), le procédé de diagnostic comprenant :
une étape de détection de pression pour détecter une pression de la chambre de travail (24) ; et une étape de détermination d'anomalie pour déterminer une anomalie de la machine hydraulique sur la base d'un résultat de détection de l'étape de détection de pression,
une étape d'intégration pour intégrer les valeurs de mesure de la pression de la chambre de travail (24) détectée à l'étape de détection de pression en correspondance avec un cycle de mouvement de va-et-vient du piston (22) de manière à calculer une valeur intégrale ; et
une étape d'obtention de pression intégrale sans dimensions pour calculer une valeur de pression intégrale sans dimensions (P') qui indique un rapport entre la valeur intégrale calculée à l'étape d'intégration et un produit d'une période du mouvement de va-et-vient du piston (22) et d'une pression d'une conduite haute pression (12) reliée à la machine hydraulique pour la communication avec la chambre de travail (24) par l'intermédiaire de la vanne haute pression (28),
dans lequel, à l'étape de détermination d'anomalie, une anomalie de la machine hydraulique est déterminée en prenant en considération au moins le fait que la valeur de pression intégrale sans dimensions (P') est, ou non, dans les limites d'une plage prescrite.
